# EUROPEAN PATENT SPECIFICATION

(11) **EP 2 727 892 B1**
(45) Date of publication and mention of the grant of the patent: **09.08.2017**
(21) Application number: 12804881.6
(22) Date of filing: 27.06.2012
(51) Int. Cl.: C04B 16/06, C04B 28/02, D01F 6/46, D02G 3/22, D01D 5/253, C04B 111/60

(54) **CONCRETE-REINFORCING CONNECTING FIBERS AND MANUFACTURING METHOD THEREOF**
ZEMENTBEWEHRENDE VERBINDUNGSFASERN UND HERSTELLUNGSVERFAHREN DAFÜR
FIBRES DE LIAISON DE RENFORCEMENT DU BÉTON ET LEUR PROCÉDÉ DE FABRICATION

(30) Priority: 28.06.2011 JP 2011143572
(43) Date of publication of application: 07.05.2014
(73) Proprietor: Hagihara Industries Inc., Okayama 712-8502 (JP)
(72) Inventor: YABUKI, Masuo, Kurashiki-shi Okayama 712-8502 (JP); INOUE, Tomoki, Kurashiki-shi Okayama 712-8502 (JP); KAIHARA, Yuichi, Kurashiki-shi Okayama 712-8502 (JP)
(74) Representative: Müller-Boré & Partner Patentanwälte PartG mbB
(86) International application number: PCT/JP2012/066341
(87) International publication number: WO 2013/002245

(56) References cited:
- JP-A- 2004 018 352
- JP-A- 2004 018 352
- JP-A- 2009 084 140
- US-A- 4 632 861
- US-A1- 2004 265 577
- US-A1- 2008 114 130

## Description

The present invention relates to connecting fibers for reinforcing concrete. It also relates to a method for producing connecting fibers for reinforcing concrete and a method for forming a concrete surface using the fibers.

Cured concretes are highly resistant to compression and highly fire-resistant, and therefore, have been extensively used as materials for civil engineering and construction such as a material for road paving, a flooring or external wall of a building, and an inner wall of a tunnel. However, a cured concrete is featured that it is highly resistant to compression and fire, whereas it is less resistant to a tensile and less ductile, leading to volume reduction during progression of curing and drying. As a result, an external tensile may cause deformation of a concrete, leading to cracks and falling of concrete pieces.

To solve such problems, a reinforced concrete is used, which is produced by mixing filaments with a fluidized concrete containing cement, water and aggregates. A filament-containing concrete has dramatically improved toughness in comparison with a concrete free from filaments.

It is known that physical properties of filaments mixed into a concrete vary after curing, depending on their material and dimensions, and thus, attempts have been made for mixing various filaments into a concrete. Among these, filaments made of a synthetic resin, particularly polypropylene filaments have been extensively used because they are very strong, inexpensive and easily handleable.

In an actual construction site, for obtaining a molded concrete product containing filaments, filaments are mixed with a fluidized concrete containing cement, water and aggregates and then the mixture is cured. For obtaining a concrete exhibiting good toughness, filaments mixed into a concrete preferably have a large fineness and are long. By using such filaments, they can be resistant to pulling-out from a cured concrete. However, increase in a fineness of filaments makes filaments hard and rigid. Thus, mixing of filaments with a large fineness into a fluidized concrete causes a problem that the filaments protrude from the surface of the concrete before completion of curing.

The problem is generally addressed by pushing filaments protruding from a surface into the concrete surface by tamping before curing of the concrete; by burning off filaments protruding from the surface after curing a concrete; or by coating the surface with a mortar layer. These methods are, however, troublesome because they require, in addition to casing a fluidized concrete, further works such as tamping.

Meanwhile, Patent Reference No. 1 has described monofilaments for reinforcing a concrete with a length of 0.5 to 6 mm. Thus, protrusion of filaments from the surface of the cured concrete is prevented by shortening the monofilaments mixed into the concrete (specifically, 6 mm or less). The document describes, as an example of monofilaments used, polypropylene fibers, which have a diameter of 100 µm or less.

However, when monofilaments described in Patent Reference No. 1 are used as filaments for reinforcing a concrete, a concrete is not adequately effectively reinforced because an adhesion area between monofilaments and a concrete is reduced due to a short length of monofilaments.

Protrusion of filaments from a concrete surface can be prevented by adding monofilaments with a small fineness to the concrete. However, when monofilaments have a small fineness, the monofilaments tend to get entangled to become less dispersible in a concrete, resulting in insufficient strength of the concrete.

Patent Reference No. 2 has described a polypropylene fiber for reinforcing a concrete consisting of short fibers of false-twisted yarns obtained by defibrating an uniaxially drawn polypropylene string tape. There is also described that the filaments have a relatively smaller fineness, specifically 5 to 100 dr as a single-yarn fineness. Such a string shape in which a plurality of fibers are moderately defibrated gives appropriate convergence and dispersibility when being mixed into a concrete.

However, string type polyolefin filaments described in Patent Reference No. 2 are strings consisting of twisted polyolefin filaments having a relatively smaller fineness. Therefore, when they are mixed into a concrete, they may be not completely untwisted, so that the concrete may be cured while spaces remain between the polyolefin filaments in the concrete. In other words, the filaments may be inadequately dispersible in the concrete, leading to insufficient effect of reinforcing a concrete.

Patent Document No. 1:JP 08-49205A
Patent Document No. 2:JP 10-265246A

JP 2004 018352 A describes a concrete reinforcing material.

To solve the above problems, an objective of the present invention is to provide concrete-reinforcing connecting fibers which can prevent filaments from protruding from the surface of a cured concrete, exhibit good dispersibility in a concrete and are highly effective in reinforcing a concrete, as well as a production method therefor.

The above problems can be solved by providing concrete-reinforcing connecting fibers consisting of a plurality of filaments connected in side-by-side relation, wherein the concrete-reinforcing connecting fibers are made of a resin composition comprising 40 to 90% by weight of polyethylene and 10 to 60 % by weight of polypropylene, have a surface with an embossed pattern and are separable into single 200 to 2000 dtex filaments.

Herein, the concrete-reinforcing connecting fibers suitably have a length (L) of 25 to 75 mm. The concrete-reinforcing connecting fibers also suitably have a thickness (T) of 0.2 to 1.0 mm. The concrete-reinforcing connecting fibers also suitably consist of 3 to 10 said filaments connected in side-by-side relation. It is also suitable that the concrete-reinforcing connecting fibers are uniaxially drawn with a draw ratio of 8 to 25.

The above problems can be also solved by providing a method for manufacturing the concrete-reinforcing connecting fibers, comprising a first step of extruding a resin composition comprising polyethylene and polypropylene from a nozzle having a plurality of openings interconnected or proximately disposed to provide undrawn fibers consisting of a plurality of filaments connected in side-by-side relation; a second step of uniaxially drawing the undrawn fibers produced in said first step to provide a drawn fiber; a third step of embossing the drawn fibers produced in said second step: and a fourth step of cutting the embossed drawn fibers produced in said third step into fibers with a predetermined length.

The above problems can be also solved by providing a method for forming a concrete surface, comprising adding the concrete-reinforcing connecting fibers to a fluidized concrete with stirring to give a mixture, casting the mixture obtained, then smoothing the surface, and then curing the concrete. Herein, in a suitable embodiment, the above surface is the upper surface of a concrete floor.

The above problems can be also solved by providing a concrete floor formed by mixing the concrete-reinforcing connecting fibers, cement, water and an aggregate and then curing the mixture.

Concrete-reinforcing connecting fibers of the present invention can prevent filaments from protruding from the surface of a cured concrete. Furthermore, concrete-reinforcing connecting fibers of the present invention are highly dispersible in a concrete and exhibit excellent reinforcing effect. Furthermore, such concrete-reinforcing connecting fibers can be conveniently produced by a manufacturing method of the present invention.

FIG. 1 shows an apparatus for conducting Evaluation Test 2 in Examples.
FIG. 2 shows running of Evaluation Test 2 in Examples.

Connecting fibers of the present invention are concrete-reinforcing connecting fibers consisting of a plurality of filaments connected in side-by-side relation, which are made of a resin composition containing polyethylene and polypropylene, have a surface with an embossed pattern and are separable into single filaments.

The biggest feature of connecting fibers of the present invention is that they are made of a resin composition containing polyethylene and polypropylene.

Filaments made of polypropylene alone is hard and have a large bending repulsive stress, whereas connecting fibers of the present invention can reduce a bending repulsive stress of filaments because polyethylene and polypropylene are blended at a predetermined ratio. Therefore, in terms of connecting fibers of the present invention, after the surface of a concrete in the course of curing is smoothed by a pallet, trowel or the like, re-rising of filaments from the concrete surface is prevented and thus their protrusion is inhibited.

Furthermore, connecting fibers of the present invention contain polyethylene and polypropylene at a predetermined ratio, so that a connecting region between filaments (a boundary between filaments, or a film formed between filaments) tends to be torn. Thus, when being mixed into a fluidized concrete, filaments connected in side-by-side relationship are easily disconnected into single filaments and fluffs tend to be formed in such a torn connecting region. Resultantly, cement, aggregates and filaments can be so entangled that effects of preventing protrusion after smoothing and of anchoring (resistant to pullout from a concrete) can be reinforced.

Examples of polyethylene contained in the above resin composition include high-density polyethylene, linear low-density polyethylene and low-density polyethylene. Among these, preferred are linear low-density polyethylene and high-density polyethylene exhibiting good drawability and higher strength, and more preferred is high-density polyethylene. A melt flow rate (hereinafter, sometimes referred to as "MFR") of polyethylene (190 °C, load: 2160 g) is suitably 0.05 to 30 g/10 min, more preferably 0.1 to 5 g/10 min.

Examples of polypropylene contained in the above resin composition include known polypropylenes such as propylene homopolymer and ethylene-propylene block copolymer or random copolymer. Among these, preferred is propylene homopolymer, particularly isotactic polypropylene as filaments for reinforcing concrete to which higher strength is required. An MFR (230 °C, load: 2160 g) of polypropylene is suitably 0.05 to 30 g/10 min, more suitably 0.1 to 5 g/10 min.

In the above resin composition, a content of polyethylene is 40 to 90 % by weight and a content of polypropylene is 10 to 60 % by weight. If a content of polyethylene is less than 40 % by weight and a content of polypropylene is more than 60 % by weight, bending repulsive stress becomes large and filaments protrude from the surface of a concrete. A content of polyethylene is suitably 45 % by weight or more, more suitably 50 % by weight or more, further suitably 55 % by weight or more. Here, a content of polypropylene is suitably 55 % by weight or less, more suitably 50 % by weight or less, further suitably 45 % by weight or less.

If a content of polyethylene is more than 90 % by weight and a content of polypropylene is less than 10 % by weight, separability is reduced. A content of polyethylene is suitably 80 % by weight or less, more suitably 75 % by weight or less, further suitably 70 % by weight or less. A content of polypropylene is suitably 20 % by weight or more, more preferably 25 % by weight or more, further suitably 30 % by weight or more.

The above resin composition can contain, in addition to polyethylene and polypropylene, further additives such as antioxidants, light stabilizers, ultraviolet absorbers, neutralizers, lubricants, antibacterial agents, flame retardants, antistatic agents, inorganic fillers, organic fillers, pigments and plasticizers as far as they do not adversely affect effects of the present invention.

A method for manufacturing connecting fibers of the present invention contains a first step of extruding a resin composition comprising polyethylene and polypropylene from a nozzle to provide undrawn fibers consisting of a plurality of filaments connected in side-by-side relation; a second step of uniaxially drawing the undrawn fibers produced in the first step to provide a drawn fiber; a third step of embossing the drawn fibers produced in the second step; and a fourth step of cutting the embossed drawn fibers produced in the third step into fibers with a predetermined length.

In the first step, polyethylene and polypropylene are charged at a predetermined blending ratio into an extruder, melt-kneaded and extruded from nozzles as filaments to give an undrawn fiber. The undrawn fiber thus produced is comprised of a plurality of filaments connected in side-by-side relationship. Therefore, in terms of nozzles in the extruder in the first step, a plurality of openings are interconnected or proximately disposed. Increase of openings may easily cause folding of drawn fibers, so that embossing becomes difficult and also filaments mixed into a concrete cannot be easily separated into single filaments. Decrease of openings leads to lower dispersibility of filaments in a concrete. Thus, the number of openings is suitably 3 to 10, more suitably 4 to 6. The shape of the opening is not limited to a circle or ellipse, but can have a modified cross-section including polygons such as triangle and tetragon, Y-shape and star-shape.

Next, in the second step, the undrawn fiber produced in the first step is uniaxially drawn to provide a drawn fiber. Thus, molecular chains can be oriented in a longitudinal direction to give filaments with high tension strength and a small elongation. Furthermore, the filaments can be made less stretchable in a width direction and a connecting region of filaments can be easily torn. Specifically, an undrawn fiber extruded from nozzles is cooled and then subjected to uniaxial drawing by a heat stretching machine such as a hot-roll, a hot-plate and a hot-air oven types to give a drawn fiber. With a small draw ratio, filament strength is insufficient and a connecting region can be more stretchable in a width direction and thus the connecting region becomes less tearable. With a high draw ratio, filaments can be not produced because they are ruptured during drawing, and thus a draw ratio is suitably 8 to 25, more suitably 10 to 16.

Furthermore, in the third step, the drawn fiber produced in the second step is embossed to make the surface bumpy. Specifically, it is achieved by passing the drawn fiber through emboss rolls. Subsequently, in the fourth step, the drawn fiber embossed in the third step is cut into pieces with a predetermined length, to provide connecting fibers of the present invention. Since the connecting fibers of the present invention have been embossed in the third step, bumps formed in the surface bring out high anchor effects, and in the third and the fourth steps, connecting regions between filaments are damaged and partly torn, so that the filaments can be easily separated into single filaments when they are added to a concrete.

A single filament constituting the connecting fiber of the present invention thus obtained has a fineness of 200 to 2000 decitex (hereinafter, sometimes referred to as "dtex"). When filaments are used for providing a concrete having excellent toughness and for preventing falling of concrete pieces, filaments mixed into a concrete preferably have a large tensile strength or tensile elasticity per single filament, and a large fineness. However, if a fineness of filaments is too large, filaments protrude from a concrete surface. On the other hand, if a fineness is too small, filaments are aggregated as a ball (so-called fiber ball phenomenon) when they are mixed into a concrete (or during they are in a bag before mixing), leading to lower dispersibility of the filaments in the concrete. A fineness of a single filament constituting a connecting fiber is suitably 400 to 1000 dtex.

For a connecting fiber of the present invention, if a length in a longitudinal direction (L) is too large, a fiber ball tends to be formed, while if it is too small, anchor effect is insufficient. The length is, therefore, suitably 25 to 75 mm, more suitably 30 to 65 mm. For a connecting fiber of the present invention, if a thickness (T) is too large, a bending repulsive stress increases while if it is too small, filaments in a concrete become less dispersible. The thickness is, therefore, suitably 0.2 to 1.0 mm, more suitably 0.4 to 0.8 mm. For a connecting fiber of the present invention, if a width (W) is too large, separability is reduced while if it is too small, filaments become less dispersible in a concrete. The width is suitably 0.6 to 3.5 mm, more suitably 1.0 to 2.6 mm.

Furthermore, a connecting fiber of the present invention suitably consists of 3 to 10, more suitably 4 to 6 filaments connected in side-by-side relationship. Therefore, even when a single filament has a high aspect ratio (L/(diameter calculated assuming a cross-sectional area as an area of a circle (R))) of 50 to 300, the filaments can be gradually separated into single filaments during mixing them into a concrete and the filaments can be very dispersible in a concrete, to give a concrete with a large adhesion area between the filaments and the concrete (high reinforcing effect). A bending repulsive stress of the connecting fiber is suitably 80 mN or less, more suitably 60 mN or less.

Connecting fibers of the present invention are added to a fluidized concrete containing cement, water, aggregates and the like with stirring, and the resulting mixture is cast and then cured, to form a reinforced concrete. A concrete in the present invention is a mixture containing cement, aggregates and crushed materials, and water. As aggregates, both coarse and fine (sand) aggregates are often used, and a so-called mortar containing just fine aggregates can be also a concrete of the present invention.

A connecting fiber of the present invention consists of filaments connected in side-by-side relationship which are made of polyethylene and polypropylene at a predetermined ratio, and has an embossed pattern in its surface. Thus, when being mixed into a fluidized concrete, the filaments are separated into single filaments, so that fluffs are formed from broken connecting regions. Consequently, the filaments can be sufficiently tangled with cement and aggregates, so that protrusion after smoothing can be prevented and anchor effect can be supported.

Increase of the amount of connecting fibers mixed into a concrete leads to cost increase while fluidity of the concrete is reduced, leading to deterioration in workability of the concrete. On the other hand, decrease of the amount of connecting fibers mixed into a concrete leads to insufficient effect of reinforcing concrete. The amount of connecting fibers mixed into a concrete is, therefore, suitably 2 to 10 kg/m³.

A suitable embodiment of the present invention is a method for forming a concrete surface, comprising adding connecting fibers to a fluidized concrete with stirring to give a mixture, casting the mixture obtained, then smoothing the surface, and then curing the concrete. Thus, protrusion of filaments from the surface of a cured concrete can be prevented, and a concrete surface with a good appearance can be formed.

A concrete containing connecting fibers of the present invention can be extensively used as materials for civil engineering and construction such as, but not limited to, a material for road paving, a flooring or external wall of a building, and an inner wall of a tunnel. For example, connecting fibers of the present invention are suitably used when a concrete flooring is formed; specifically, protrusion of filaments from the surface of a cured concrete can be prevented, work for removing filaments protruding from the surface can be eliminated and an appearance of a concrete is not deteriorated.

### EXAMPLES

There will be more specifically described the present invention with reference to Examples.

### Example 1

### Production of connecting fibers

In an extruder was charged a mixture of high-density polyethylene (density: 0.95 g/cm³, MFR: 1.0 g/10 min (190 °C, load: 2160 g), hereinafter sometimes referred to as "PE") and polypropylene (density: 0.91 g/cm³, MFR: 0.5 g/10 min (230 °C, load: 2160 g), hereinafter sometimes referred to as "PP") at a weight ratio of 60 : 40, which was then discharged from a nozzle having four mutually contacting circular openings with a diameter of 1.2 mm which were disposed in line. The fibers discharged, from the nozzle were cooled in a water bath and drawn at a draw ratio of 12 using a hot-air type drawing machine to provide a connecting fiber consisting of four filaments connected in parallel. Next, the drawn fiber thus produced was fed to an embossing machine whose distance between rolls was set to 0.15 mm. Then, the surface of the drawn fiber was embossed in a rhombus pattern and the fiber was cut to give connecting fibers. The connecting fibers thus obtained had a width (W) of 1.3 mm, a thickness (T) of 0.42 mm and a fineness of 3200 dtex (a fineness per one filament was 800 dtex).

### Evaluation test 1 (maximum point strength, elongation at break, tensile elasticity)

Physical properties of the connecting fibers were determined in accordance with JIS L1013; a maximum point strength was 6 to 8 cN/dtex, a elongation at break was 9 to 12%, and a tensile elasticity was 8 to 11 GPa.

### Evaluation test 2 (bending repulsive stress)

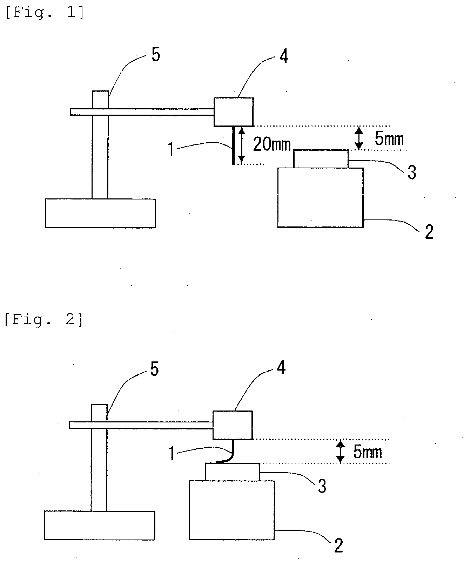

As shown in FIG. 1, an electronic balance 2 and a stand 5 equipped with a holder 4 were prepared. The holder 4 was fixed such that it was disposed in parallel with the weighing dish 3 of the electronic balance 2 and a distance from the top of the weighing dish 3 of the electronic balance 2 was 5 mm. Then, the connecting fiber was cut into a length of 50 mm to give a test piece 1, which was held by a holder 4 such that it was exposed from the holder 4 by 20 mm in a downward/vertical direction. Subsequently, as shown in FIG. 2, the lower end of the test piece 1 was gently placed on the center of the weighing dish 3 of the electronic balance 2 and allowed to stand for one minute. While the state was maintained, a load was applied as a bending repulsive stress (31 mN) as indicated in the electronic balance 2. The results are shown in Table 1.

### Evaluation test 3 (the state of a connecting fiber)

### (1) Separability

After the above evaluation test 2, a connecting fiber was evaluated for the presence of a torn connecting region in accordance with the following rating criteria, and was rated as "A". The results are shown in Table 1.
A: a connecting region has a tear, and when the connecting fiber is rubbed, it is separated into single filaments.
B: some fibers have a tear in their end and the others have no tears, and when the connecting fiber is strongly rubbed, it is separated into single filaments.
C: there are no tears in connecting regions and even when the connecting fiber is strongly rubbed, it is little separated into single filaments.

### (2) Fluffs

After the above evaluation test 2, based on observation of a tear in the connecting fiber, the presence of fluffs was evaluated in accordance with the following rating criteria, and was rated as "A". The results are shown in Table 1.
A: fluffs are observed.
B: fluffs are sparsely observed.
C: no fluffs are observed.

### Evaluation test 4 (bonding test)

Bonding test was conducted by determining the maximum pullout load (N) and an area under a load-slippage curve to a slippage of 3 mm ((N·mm), hereinafter, sometimes referred to as "pullout energy") in accordance with "JCI-SF8: method for bonding test of a fiber", a standard for test methods of fiber reinforced concrete in JCI rules (1977-2002) of Japan Concrete Institute. The maximum pullout load was 325 N and a pullout energy was 642 N·mm. The results are shown in Table 1.

### Evaluation test 5 (concrete formation test)

To a concrete material consisting of Portland cement, fine aggregate, coarse aggregate and AE (Air Entraining) water reducing agent (water/cement ratio (a rate of the weight of water to the weight of cement): 0.65) were added connecting fibers with a length of 58 mm in an amount of 3 kg/m³, and the mixture was mixed by a concrete mixer. Then, the concrete material containing the connecting fibers was cast into a formwork and the surface of the concrete was smoothed by a trowel. Then, the state of the surface was visually observed. In accordance with the evaluation criteria described below, it was rated as "A". The evaluation results are shown in Table 1.
A: no filaments protrude.
B: filament protrusion is sparsely observed.
C: protruding filaments are noticeable because they are little separated.
D: many protruding filaments are observed.

### Examples 2 and 3, and Comparative Examples 1 to 3

Connecting fibers were produced as described in Example 1, except that a blending ratio of PE to PP was varied as shown in Table 1, and evaluated by Evaluation tests 2, 3 and 5. The results are summarized in Table 1.

### Comparative Example 4

Connecting fibers were produced as described in Example 1, except that embossing (the third step) was not conducted, and evaluated by Evaluation tests 2 to 4. The results are shown in Table 1.

**Table 1**

| | Blending ratio (% by weight) | | Emboss | Bending repulsive stress (mN) | State of connecting fiber | | Bonding test | | Concrete formation test (Protrusion of filaments) |
|---|---|---|---|---|---|---|---|---|---|
| | PE | PP | | | Separability | Fluffs | Maximum pullout load (N) | Pullout energy (N·mm) | |
| Example 1 | 60 | 40 | Yes | 31 | A | A | 325 | 642 | A |
| Example 2 | 80 | 20 | Yes | 34 | B | A | - | - | A |
| Example 3 | 40 | 60 | Yes | 47 | A | A | - | - | B |
| Comparative Example 1 | 100 | 0 | Yes | 44 | C | - | - | - | C |
| Comparative Example 2 | 20 | 80 | Yes | 71 | A | B | - | - | D |
| Comparative Example 3 | 0 | 100 | Yes | 83 | A | C | - | - | D |
| Comparative Example 4 | 60 | 40 | No | 87 | C | - | 55 | 159 | - |

| | | | | | | | | | |
|---|---|---|---|---|---|---|---|---|---|
| *In this table, "-" means "not evaluated". | | | | | | | | | |

As shown in Table 1, the connecting fibers in Examples 1 to 3 made of a resin composition containing 40 to 90 % by weight of polyethylene and 10 to 60 % by weight of polypropylene had a small bending repulsive stress and were excellent in tearability of connecting regions and fluff formation, and in a concrete formation test, protrusion of filaments was prevented. In contrast, in Comparative Example 1 consisting of polyethylene, connecting regions were resistant to tearing and in the concrete formation test, protruding filaments were little separated and thus prominent. In Comparative Examples 2 and 3 with a polypropylene content of more than 60 % by weight, a bending repulsive stress was large and in the concrete formation test, many filaments protruded. Furthermore, as obvious from comparison between Example 1 and Comparative Example 4, embossing of a connecting fiber allowed separability to be improved and good anchor effect to be achieved in the bonding test.

### DESCRIPTION OF THE REFERENCE NUMERALS

- 1:: Test piece
- 2:: Electronic balance
- 3:: Weighing dish
- 4:: Holder
- 5:: Stand

## Claims

1. Concrete-reinforcing connecting fibers consisting of a plurality of filaments connected in side-by-side relation, wherein the connecting fibers for reinforcing concrete are made of a resin composition comprising 40 to 90 % by weight of polyethylene and 10 to 60 % by weight of polypropylene, have a surface with an embossed pattern and are separable into single 200 to 2000 dtex filaments.

2. The concrete-reinforcing connecting fibers as claimed in Claim 1, having a length (L) of 25 to 75 mm.

3. The concrete-reinforcing connecting fibers as claimed in Claim 1 or 2, having a thickness (T) of 0.2 to 1.0 mm.

4. The concrete-reinforcing connecting fibers as claimed in any of Claims 1 to 3, consisting of 3 to 10 said filaments connected in side-by-side relation.

5. The concrete-reinforcing connecting fibers as claimed in any of Claims 1 to 4, which are uniaxially drawn with a draw ratio of 8 to 25.

6. A method for manufacturing the concrete-reinforcing connecting fibers as claimed in any of Claims 1 to 5, comprising
a first step of extruding a resin composition comprising polyethylene and polypropylene from a nozzle having a plurality of openings interconnected or proximately disposed to provide undrawn fibers consisting of a plurality of filaments connected in side-by-side relation,
a second step of uniaxially drawing the undrawn fibers produced in said first step to provide a drawn fiber,
a third step of embossing the drawn fibers produced in said second step, and
a fourth step of cutting the embossed drawn fibers produced in said third step into fibers with a predetermined length.

7. A method for forming a concrete surface, comprising
adding the concrete-reinforcing connecting fibers as claimed in any of Claims 1 to 5 to a fluidized concrete with stirring to give a mixture,
casting the mixture obtained,
then smoothing the surface, and
then curing the concrete.

8. The method for forming a concrete surface as claimed in Claim 7, wherein said surface is the upper surface of a concrete floor.

9. A concrete floor formed by mixing the concrete-reinforcing connecting fibers as claimed in any of Claims 1 to 5, cement, water and an aggregate and then curing the mixture.

## Patentansprüche

1. Betonverstärkende Verbindungsfasern, bestehend aus einer Mehrzahl an Filamenten, verbunden in Nebeneinanderbeziehung, wobei die Verbindungsfasern zur Betonverstärkung aus einer Harzzusammensetzung, umfassend 40 bis 90 Gewichts-% an Polyethylen und 10 bis 60 Gewichts-% an Polypropylen, gebildet sind, eine Oberfläche mit einer geprägten Struktur aufweisen und in einzelne 200 bis 2000 dtex Filamente trennbar sind.

2. Betonverstärkende Verbindungsfasern wie in Anspruch 1 beansprucht, die eine Länge (L) von 25 bis 75 mm aufweisen.

3. Betonverstärkende Verbindungsfasern wie in Anspruch 1 oder 2 beansprucht, die eine Dicke (T) von 0,2 bis 1,0 mm aufweisen.

4. Betonverstärkende Verbindungsfasern wie in einem der Ansprüche 1 bis 3 beansprucht, die aus 3 bis 10 der Filamente, verbunden in Nebeneinanderbeziehung, bestehen.

5. Betonverstärkende Verbindungsfasern wie in einem der Ansprüche 1 bis 4 beansprucht, die mit einem Reckverhältnis von 8 bis 25 uniaxial verstreckt werden.

6. Verfahren zur Herstellung der betonverstärkenden Verbindungsfasern, wie in einem der Ansprüche 1 bis 5 beansprucht, umfassend
einen ersten Schritt des Extrudierens einer Harzzusammensetzung, umfassend Polyethylen und Polypropylen, aus einer Düse mit einer Mehrzahl an untereinander verbundenen oder nebeneinander angeordneten Öffnungen, um unverstreckte Fasern, bestehend aus einer Mehrzahl an Filamenten, verbunden in Nebeneinanderbeziehung, bereitzustellen,
einen zweiten Schritt des uniaxialen Verstreckens der unverstreckten Fasern, hergestellt in dem ersten Schritt, um eine verstreckte Faser bereitzustellen, einen dritten Schritt des Prägens der verstreckten Fasern, hergestellt in dem zweiten Schritt, und
einen vierten Schritt des Schneidens der geprägten verstreckten Fasern, hergestellt in dem dritten Schritt, zu Fasern mit einer vorbestimmten Länge.

7. Verfahren zur Bildung einer Betonoberfläche, umfassend
das Hinzufügen der betonverstärkenden Verbindungsfasern, wie in einem der Ansprüche 1 bis 5 beansprucht, zu einem verflüssigten Beton unter Rühren, um eine Mischung zu ergeben,
das Gießen der erhaltenen Mischung,
das anschließende Glätten der Oberfläche und
das anschließende Härten des Betons.

8. Verfahren zur Bildung einer Betonoberfläche wie in Anspruch 7 beansprucht, wobei die Oberfläche die obere Oberfläche eines Betonbodens darstellt.

9. Betonboden, gebildet durch das Mischen von den betonverstärkenden Verbindungsfasern, wie in einem der Ansprüche 1 bis 5 beansprucht, Zement, Wasser und einem Zuschlag und das anschließende Härten der Mischung.

## Revendications

1. Fibres de liaison pour le renforcement d'un béton constituées d'une pluralité de filaments reliés selon une relation côte à côte, dans lesquelles les fibres de liaison servant à renforcer un béton sont faites d'une composition de résine comprenant 40 à 90 % en poids d'un polyéthylène et 10 à 60 % en poids d'un polypropylène, ont une surface présentant un motif en relief et peuvent être séparées en monofilament de 200 à 2000 dtex.

2. Fibres de liaison pour le renforcement d'un béton selon la revendication 1, ayant une longueur (L) de 25 à 75 mm.

3. Fibres de liaison pour le renforcement d'un béton selon la revendication 1 ou 2, présentant une épaisseur (T) de 0,2 à 1,0 mm.

4. Fibres de liaison pour le renforcement d'un béton selon l'une quelconque des revendications 1 à 3, constituées de 3 à 10 desdits filaments reliés selon une relation côte à côte.

5. Fibres de liaison pour le renforcement d'un béton selon l'une quelconque des revendications 1 à 4, qui sont étirées de manière uniaxiale avec un rapport d'étirage de 8 à 25.

6. Procédé de fabrication des fibres de liaison pour le renforcement d'un béton selon l'une quelconque des revendications 1 à 5, comprenant
une première étape d'extrusion d'une composition de résine comprenant un polyéthylène et un polypropylène à partir d'une buse ayant une pluralité d'ouvertures interconnectées ou disposées à proximité les unes des autres pour fournir des fibres non étirées constituées d'une pluralité de filaments reliés selon une relation côte à côte,
une deuxième étape d'étirage uniaxial des fibres non étirées produites dans ladite première étape pour obtenir une fibre étirée,
une troisième étape de gaufrage des fibres étirées produites dans ladite deuxième étape, et
une quatrième étape de découpe des fibres étirées gaufrées produites dans ladite troisième étape en fibres ayant une longueur prédéterminée.

7. Procédé de formation d'une surface de béton, comprenant l'ajout des fibres de liaison pour le renforcement d'un béton selon l'une quelconque des revendications 1 à 5 à un béton fluidisé sous agitation pour donner un mélange,
le coulage du mélange obtenu,
puis le lissage de la surface, et
ensuite le durcissement du béton.

8. Procédé de formation d'une surface de béton selon la revendication 7, dans lequel ladite surface est la surface supérieure d'un sol en béton.

9. Sol en béton formé par le mélange des fibres de liaison pour le renforcement d'un béton selon l'une quelconque des revendications 1 à 5, d'un ciment, d'eau et d'un agrégat et ensuite par le durcissement du mélange.
